Europäisches Patentamt

(19) European Patent Office

Office européen des brevets

(11) Numéro de publication: **0 243 218**
**B1**

(12)

# FASCICULE DE BREVET EUROPÉEN

(45) Date de publication du fascicule du brevet: 28.02.90

(51) Int. Cl. ⁵: **B 23 P 19/06, B 25 B 23/08**

(21) Numéro de dépôt: 87400595.2

(22) Date de dépôt: 17.03.87

(54) Dispositif de positionnement pour le vissage et le dévissage d'un écrou.

(30) Priorité: 18.04.86 FR 8605614

(43) Date de publication de la demande: 28.10.87 Bulletin 87/44

(45) Mention de la délivrance du brevet: 28.02.90 Bulletin 90/09

(84) Etats contractants désignés: BE CH DE ES GB IT LI NL SE

(56) Documents cité:
DE-A-2 554 420
FR-A-2 208 756
FR-A-2 367 574
GB-A-2 139 128

(73) Titulaire: FRAMATOME
Tour Fiat 1, Place de la Coupole
F-92400 Courbevoie (FR)

(72) Inventeur: Sevelinge, Gérard
9 Bis, rue Saint Gengaux
F-71300 Montceau-les-Mines (FR)

(74) Mandataire: Polus, Camille
c/o Cabinet Lavoix 2, Place d'Estienne d'Orves
F-75441 Paris Cedex 09 (FR)

LIBERGRAF, STOCKHOLM 1990

**Description**

La présente invention a pour objet un dispositif de positionnement pour le vissage et le dévissage d'un écrou, notamment d'un écrou de tensionnement d'éléments de vissage de grandes dimensions.

Dans les installations industrielles mettant en oeuvre des éléments de vissage de grandes dimensions, on exerce, pendant les opérations de serrage et de desserrage, une traction sur lesdits éléments par l'intermédiaire d'un dispositif de tension, en vue de les maintenir en état de précontrainte.

C'est notamment le cas dans les réacteurs nucléaires, ou un couvercle est fixé de manière amovible sur une cuve afin de permettre le rechargement périodique en combustible du réacteur et, à la faveur de celui-ci, une inspection de l'intérieur de la cuve.

A cet effet, le couvercle est fixé sur la cuve du réacteur par des goujons de grandes dimensions qui sont vissés dans la collerette de la cuve et qui pénetrent dans des trous lisses prévus dans la collerette du couvercle. Ces goujons sont généralement employés en assez grand nombre et relativement rapprochés les uns des autres, si bien que le démontage et le remontage du couvercle necessitent le dévissage et le vissage de tous ces goujons et également leur mise en tension à chaque vissage et dévissage.

Cette mise en tension des goujons à chaque vissage et dévissage est généralement assurée par un ensemble de verins qui exerce un effort de traction sur chaque goujon par l'intermédiaire d'une piece de prise constituée par exemple par un écrou de mise en tension vissé sur l'extrémité libre du goujon.

Compte tenu de la masse importante des goujons et des écrous de mise en tension, le vissage desdits écrous est une opération délicate, car il faut rechercher par tâtonnement la coaxialité entre ces différents éléments, ce qui risque de provoquer une détérioration du premier filet due à l'absence de centrage de l'écrou par rapport au goujon et au manque de réglage angulaire impliquant à chaque intervention une nouvelle recherche pour disposer les filets dans le prolongement l'un de l'autre.

La durée nécessaire pour effectuer cette intervention est relativement importante, et il en résulte que le personnel, durant ce travail, risque de séjourner pendant une période excessivement longue dans une zone de rayonnements radioactifs trop élevés.

On connaît dans le DE-A-2 554 420 un dispositif de recherche de la position optimale de vissage d'un écrou sur un goujon qui comporte un organe de préhension de l'écrou constitué par une douille, des moyens de centrage axial de ladite douille par rapport à l'élément de vissage, des moyens pour la mise en rotation de ladite douille et des moyens pour le déplacement axial de la douille.

Il s'agit donc essentiellement d'un dispositif de recherche de la position optimale de vissage dans lequel l'écrou est placé et bloqué dans l'orifice de la douille.

On connaît également dans le FR-A-2 367 574, un dispositif pour monter et démonter des goujons, dans lequel l'écrou utilisé pour le serrage et la mise en précontrainte du goujon dispose dans sa partie inférieure, d'un embout taraudé comportant un doigt de fin de vissage sur le goujon, et dans sa partie centrale, une butée sphérique coopérant dans un logement de forme complémentaire. L'extrémité supérieure de l'écrou est liée à un système à double cardans, et l'ensemble est associé à une suspension élastique.

La chaîne cinématique de l'association de ces éléments donne à l'écrou, dans la phase de recherche de la position optimale de vissage, un mouvement rotulien, ce qui induit des frottements parasites, principalement au niveau du contact des deux sphères.

Le but de l'invention est donc de proposer un dispositif de positionnement automatique pour le vissage et le dévissage d'un écrou qui soit de constitution simple et qui permette à chaque intervention le respect de la coaxiabilité de l'écrou par rapport au goujon.

Suivant l'invention, le dispositif comprend une douille filetée extérieurement destinée au transfert de l'écrou et des moyens de centrage axial et de calage angulaire de ladite douille par rapport à l'élément de vissage pour générer une rampe hélicoïdale continue entre les filets extérieurs de la douille et les filets de l'élément de vissage.

Selon une caractéristique de l'invention, les moyens de centrage axial de la douille de transfert par rapport à l'élément de vissage sont constitués par un prolongateur placé sur la tête de l'élément de vissage et comprenant à sa partie supérieure un téton de centrage sur lequel ladite douille est positionnée coaxialement à l'axe dudit élément de vissage.

Selon une autre caractéristique de l'invention, les moyens de calage angulaire de la douille de transfert par rapport à l'élément de vissage sont constitués par un doigt escamotable de direction axiale implanté dans ladite douille et coopérant avec une rondelle de réglage.

Afin de bien faire comprendre l'invention, on va maintenant décrire, en se référant aux figures jointes en annexe, un mode particulier de réalisation du dispositif suivant l'invention.

- La figure 1 est une vue schématique en plan d'un robot de vissage muni du dispositif conforme à l'invention.
- La figure 2 est une vue à plus grande échelle du dispositif conforme à l'invention.

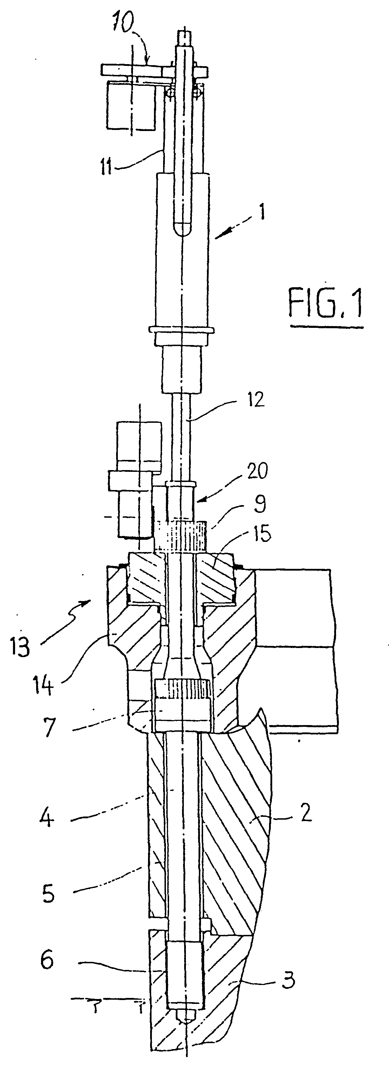

Le robot de vissage et dévissage 1, tel qu'il est représenté schématiquement sur la figure 1, est utilisé pour ouvrir ou fermer un couvercle 2 d'une cuve 3 par exemple d'un réacteur nucléaire.

Comme cela est bien connu, le couvercle 2 et la cuve 3 ont une forme de révolution autour d'un axe géométrique vertical. Le couvercle 2 est fixé de manière détachable sur la cuve 3 au moyen de plusieurs goujons 4 d'axe vertical qui sont régulièrement répartis à la periphérie du couvercle 2 et de la cuve 3.

Chaque goujon 4 passe à travers un trou lisse 5 prévu verticalement dans le bord périphérique du couvercle 2 et est muni, à sa partie inférieure, d'un filetage destiné à être vissé dans un trou taraudé 6 du bord périphérique de la cuve 3 et, à sa partie médiane, d'un second filetage sur lequel est vissé un écrou de cuve 7 qui s'appuie sur la face supérieure du bord périphérique du couvercle 2. D'autre part, le goujon 4 comporte à sa partie supérieure des filets 8 permettant le vissage d'un écrou 9 de mise en tension.

D'autre part, le robot de vissage et dévissage 1 comprend un système 10 de recherche de la position optimale de vissage du goujon 4 comportant un arbre 12 qui permet d'exercer sur ledit goujon un couple d'entraînement dans les deux sens.

La mise en tension des goujons 4 est réalisée par un dispositif 13 qui exerce une traction sur lesdits goujons en vue de les maintenir dans un état de précontrainte de façon à permettre le serrage ou le desserrage dans cette position des écrous de cuve 7. Ce dispositif de mise en tension 13 est constitué par un anneau porteur 14 ayant une forme de révolution autour d'un axe géométrique vertical correspondant à la forme de révolution du couvercle 2. L'anneau porteur 14 s'appuie sur la face supérieure du bord périphérique du couvercle 2 et comporte une série de vérins 15 qui exercent sur les goujons une traction par l'intermédiaire de l'écrou 9 vissé sur la partie supérieure de chaque goujon.

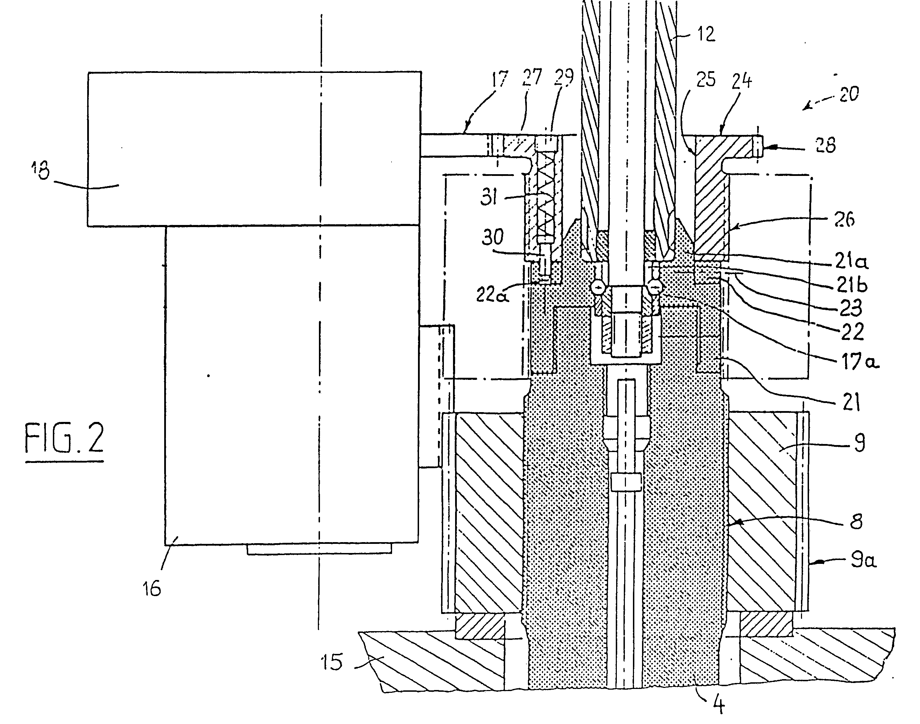

Pour permettre le vissage et le dévissage de l'écrou de mise en tension 9, le robot de vissage comporte un dispositif de positionnement automatique désigné dans son ensemble par la référence 20 et qui sera décrit plus en détail en se reportant à la figure 2.

Sur cette figure, on a représenté un vérin 15 de l'anneau porteur du dispositif de mise en tension, ainsi que l'extrémité supérieure du goujon 4 avec son filetage supérieur 8 sur lequel est vissé l'écrou de mise en tension 9.

L'écrou de mise en tension 9 comporte sur son pourtour extérieur une denture 9a qui coopère avec un motoréducteur 16 de vissage et dévissage dudit écrou 9.

Le dispositif de positionnement 20 se compose d'un prolongateur 21 vissé et bloqué sur la tête du goujon 4. Ce prolongateur 21 comporte, à sa partie supérieure, un téton de centrage 21a et un évidement central 21b dans lequel l'extrémité de l'arbre 12 du robot de vissage 1 est bloquée par un système de vérouillage à bille 17a.

Une rondelle de réglage 22 est placée sur le téton de centrage 21a du prolongateur 21. Cette rondelle de réglage 22 comporte un petit trou vertical 22a et est calée sur le prolongateur 21 par au moins une vis 23 dans une position déterminée, comme on le verra ultérieurement.

Une douille filetée 24 est positionnée coaxialement à l'axe du goujon 4 à l'aide du téton de centrage 21a du prolongateur 20 et en appui sur la face supérieure de la rondelle de réglage 22. Pour son positionnement sur le téton de centrage 21a, la douille filetée 24 comporte un évidement interne 25 qui permet également le passage de l'extrémité de l'arbre 12.

Par ailleurs, la douille filetée 24 comporte une partie extérieure filetée 26 destinée à recevoir l'écrou 9 de mise en tension, et à sa partie supérieure une collerette 27 munie en périphérie d'une denture 28 coopérant avec une roue motrice 17 d'un motoréducteur 18 de mise en rotation. Le diamètre et le pas de la partie extérieure filetée 26 de la douille 24 sont identiques au diamètre et au pas du filet supérieur 8 du goujon 4.

Enfin, à l'intérieur de la douille filetée 24 est implanté, parallèlement à l'axe de ladite douille, dans un logement vertical 29, un doigt 30 associé à un élément élastique 31. Le doigt 30 peut soit s'éclipser dans son propre logement 29 permettant ainsi la rotation de la douille filetée 24, ou bien il peut se loger dans le petit trou 22a ménagé dans la rondelle de réglage 22.

Le fonctionnement du dispositif ainsi décrit est le suivant:

Tout d'abord, sur le goujon 4 est fixé à demeure le prolongateur 21 sur lequel repose la rondelle de réglage 22. Le positionnement de la rondelle 22 sur le prolongateur 21 par au moins une vis de calage 23 est préalablement réglé angulairement pour que la position du petit trou 22a détermine une position du début du filet 26 de la douille filetée 24 correspondant à la fin du filet supérieur 8 du goujon 4.

Après avoir fixé sur la tête du goujon 4 le prolongateur 21 et positionné la rondelle de réglage 22, on visse à l'aide du robot de vissage 1 le goujon 4 dans le trou taraudé 6 de la cuve 3, et l'écrou de cuve 7 sur le filetage intermédiaire dudit goujon, puis on met en place l'anneau porteur 14 du dispositif de mise en tension 13.

Ensuite, on visse sur le filetage supérieur 8 du goujon 4 l'écrou de mise en tension 9 et on réalise la mise en tension du goujon 4 par l'intermédiaire du vérin 15 pour effectuer le serrage de l'écrou de cuve 7.

Après cette opération, pour retirer l'écrou de mise en tension 9, on positionne la douille filetée 24 coaxialement à l'axe du goujon 4 à l'aide du téton de centrage 21a du prolongateur 21, et en appui sur la face supérieure de la rondelle 22 préalablement réglée angulairement, puis on fait tourner d'une fraction de tour la douille filetée 24 par l'intermédiaire de la roue dentée 17 du motoréducteur 18 coopérant avec la denture 28, pour que le doigt escamotable 30 vienne s'encliqueter dans le petit trou 22a de la rondelle 22.

On obtient donc le centrage et le calage angulaire de la douille filetée 24 par rapport au goujon 4 de telle manière que la position du début du filet de la douille 24 corresponde à la position de la fin du filet du goujon.

Le dispositif, ainsi centré et calé angulairement, permet automatiquement, après avoir relâché le dispositif de mise en tension, de dévisser l'écrou 9 du goujon 4 et de le visser sur la douille filetée 24 à l'aide du motoréducteur 16, comme cela est représenté en traits mixtes sur la figure 2.

La douille filetée 24 supportant l'écrou de mise en tension 9 peut être facilement retirée du prolongateur 21, puis remise en place lors d'un, nouveau vissage dudit écrou sur la tête de goujon.

Après avoir repositionné le doigt escamotable 30 dans le petit trou 22a de la rondelle de réglage 22, il suffit d'actionner le motoréducteur 16 pour revisser l'écrou 9 sur le filet supérieur 8 du goujon 4.

Grâce à cette disposition, on obtient le respect de la coaxialité du goujon et de l'écrou, et l'engagement sûr de l'écrou sur les filets du goujon par l'indexation des filets de la douille qui génèrent avec les filets du goujon une spirale continue.

Ces deux avantages sont indépendants des variations de la position angulaire de la tête de goujon et de son niveau de vissage dans la bride de cuve.

Une des particularités du présent dispositif est qu'il permet au premier filet de l'écrou d'être en prise avec le premier filet de la douille, alors que les derniers filets dudit écrou sont encore en prise avec les filets du goujon. On obtient de la sorte un guidage de l'écrou sans qu'il puisse basculer sur lesdits filets et s'en échapper il en résulte un meilleur guidage pour le processus de réengagement et revissage de l'écrou.

Enfin, le dispositif suivant l'invention s'applique non seulement aux centrales nucléaires, mais également aux installations pétrolières et pétrochimiques, aux installations minières, ou encore pour la fermeture de turbines, vannes hydrauliques, conduites sous pression ou corps de vannes. De façon générale, le dispositif suivant l'invention s'applique dans le cas de nombreuses installations industrielles mettant en oeuvre des éléments de vissage de grandes dimensions.

**Revendications**

1. Dispositif de positionnement automatique pour le vissage et le dévissage d'un écrou (9) sur un élément de vissage (4) formé par exemple par un goujon ou une tige filetée, caractérisé en ce qu'il comprend une douille (24) filetée extérieurement destinée au transfert de l'écrou (9) et des moyens de centrage axial et de calage angulaire de ladite douille (24) par rapport à l'élément de vissage (4) pour générer une rampe hélicoïdale continue entre les filets extérieurs (26) de la douille (24) et les filets (8) de l'élément de vissage (4).

2. Dispositif selon la revendication 1 caractérisé en ce que les moyens de centrage axial de la douille de transfert (24) par rapport à l'élément de vissage (4) sont constitués par un prolongateur (21) placé sur la tête de l'élément de vissage et comprenant à sa partie supérieure en téton de centrage (21a) sur lequel ladite douille (24) est positionnée coaxialement à l'axe dudit élément de visage (4).

3. Dispositif selon la revendication 1 caractérisé en ce que les moyens de calage angulaire de la douille de transfert (24) par rapport à l'élément de vissage (4) sont constitués par un doigt escamotable (30) de direction axiale implanté dans ladite douille (24) et coopérant avec une rondelle de réglage (22).

4. Dispositif selon la revendication 3, caractérisé en ce que la rondelle de réglage (22) comporte un petit trou vertical (22a) destiné à recevoir l'extrémité du doigt escamotable (30) associé à un élément élastique (31).

5. Dispositif selon la revendication 3, caractérisé en ce que la rondelle de réglage (22) est disposée sur le téton de centrage (21a) du prolongateur (21), au-dessous de la douille de transfert (24).

6. Dispositif selon l'une des revendications précédentes, caractérisé en ce que la douille de transfert (24) comporte à sa partie supérieure une collerette (27) munie en périphérie d'une denture (28) coopérant avec une roue motrice (17) d'un motoréducteur (18) de mise en rotation de ladite douille (24) pour positionner le doigt escamotable (30) dans le petit trou (22a) de la rondelle de réglage (22).

**Patentansprüche**

1. Automatische Positioniervorrichtung zum Schrauben und Losschrauben einer Mutter (9) auf einem Schraubenelement (4), das beispielsweise durch einen Bolzen oder eine Gewindestange gebildet ist, dadurch gekennzeichnet, daß sie eine mit einem Außengewinde versehene Hülse (24), die für die Übertragung der Mutter (9) bestimmt ist, und Einrichtungen zur axialen Zentrierung und dem winkeligen Klemmen der genannten Hülse (24) bezüglich des Schraubenelements (4) aufweist, um eine schraubenförmige durchgehende Rampe zwischen den Außengewinden (26) der Hülse (24) und den Gewinden (8) des Schraubenelements (4) zu erzeugen.

2. Vorrichtung nach Anspruch 1, dadurch gekennzeichnet, daß die Einrichtungen zur axialen Zentrierung der Übertragungshülse (24) bezüglich des Schraubenelements (4) aus einem Verlängerer (21) gebildet sind, der auf dem Kopf des Schraubenelements (4) angeordnet ist und an dem oberen Bereich einen Zentrierungsvorsprung (21a) aufweist, auf dem die genannte Hülse (24) koaxial zur Achse des Schraubenelements (4) positioniert ist.

3. Vorrichtung nach Anspruch 1, dadurch gekennzeichnet, daß die Einrichtungen der winkeligen Einstellung der Übertragungshülse (24) bezüglich des Schraubenelements (4) aus einem einziehbaren Finger (30) mit axialer Ausrichtung gebildet sind, der in der genannten Hülse (24) eingebettet ist und mit einem Einstellrad (22) zusammenwirkt.

4. Vorrichtung nach Anspruch 3, dadurch gekennzeichnet, daß das Einstellrad (22) ein kleines vertikales Loch (22a) aufweist, das dazu bestimmt ist, das Ende des einziehbaren Fingers (30), das einem elastischen Element (31) zugeordnet ist, aufzunehmen.

5. Vorrichtung nach Anspruch 3, dadurch gekennzeichnet, daß das Einstellrad (22) auf dem Zentrierungsvorsprung (21a) des Verlängerers (21) unterhalb der Übertragungshülse (24) angeordnet ist.

6. Vorrichtung nach einem der vorhergehenden Ansprüche, dadurch gekennzeichnet, daß die Übertragungshülse (24) an ihrem oberen Bereich einen Kragen (27) aufweist, der am Umfang mit Zähnen (28) versehen ist, die mit einem Antriebsrad (17) eines Getriebes (18) zum In-Drehen-Versetzen der genannten Hülse (24) zusammenwirkt, um den einziehbaren Finger (30) in dem kleinen Loch (22a) des Einstellrads (22) zu positionieren.

**Claims**

1. Automatic positioning device for screwing and unscrewing a nut (9) on a screwed component (4) formed, for example, by a pin or a threaded rod, characterised in that it comprises an externally threaded bush (24) intended for transferring the nut (9) and means for axially centering and angularly setting the said bush (24) relative to the screwed component (4), to generate a continuous helical flight between the external threads (26) of the bush (24) and the threads (8) of the screwed component (4).

2. Device according to claim 1, characterised in that the means for axially centering the transfer bush (24) relative to the screwed component (4) comprise an extension piece (21) placed on the head of the screwed component and having in its upper part a centering stud (21a), on which the said bush (24) is positioned coaxially relative to the axis of the said screwed component (4).

3. Device according to claim 1, characterised in that the means for angularly setting the transfer bush (24) relative to the screwed component (4) comprise an axially directed retractable finger (30) fitted in the said bush (24) and interacting with an adjusting washer (22).

4. Device according to claim 3, characterised in that the adjusting washer (22) has a small vertical hole (22a) intended to receive the end of the tractable finger (30) associated with a resilieι member (31).

5. Device according to claim 3, characterised in that the adjusting washer (22) is arranged on the centering stud (21a) of the extension piece (21) underneath the transfer bush (24).

6. Device according to any one of the preceding claims, characterised in that the transfer bush (24) has, in its upper part, a collar (27) having on its periphery teeth (28) interacting with a drive wheel (17) of a geared motor (18) for rotating the said bush (24), in order to position the retractable finger (30) in the small hole (22a) of the adjusting washer (22).

EP 0 243 218 B1

FIG.1

FIG.2